# EUROPÄISCHE PATENTSCHRIFT

(11) **EP 3 672 001 B1**
(45) Veröffentlichungstag und Bekanntmachung des Hinweises auf die Patenterteilung: **12.01.2022**
(21) Anmeldenummer: 19306613.1
(22) Anmeldetag: 10.12.2019
(51) Int. Cl.: H02G 3/08, H02G 3/10, H02G 3/12, H02G 3/14

(54) **ELEKTRISCHES INSTALLATIONSGEHÄUSE**
ELECTRIC INSTALLATION HOUSING
BOÎTIER D'INSTALLATION ÉLECTRIQUE

(30) Priorität: 19.12.2018 DE 102018132903
(43) Veröffentlichungstag der Anmeldung: 24.06.2020
(73) Patentinhaber: Schneider Electric Industries SAS, 92500 Rueil Malmaison (FR)
(72) Erfinder: Krishnan, Suchint, 51674 Wiehl (DE); Vicktorius, Richard, 50733 Köln (DE); Narayanan, Shree Ganesh, 51643 Gummersbach (DE); Kullolli, Dharmveer, 51674 Wiehl (DE); Narayana, Deekshith, 51674 Wiehl (DE)
(74) Vertreter: Manitz Finsterwald Patent- und Rechtsanwaltspartnerschaft mbB

(56) Entgegenhaltungen:
- BE-A3- 1 020 602
- FR-A1- 2 780 567
- FR-B1- 2 780 567
- Legrand: "Batibox - Boîte d'encastrement", , 23. Januar 2007 (2007-01-23), XP055507517, Gefunden im Internet: URL:http://documentation.mb-expansion.fr/m aeva/pdf/LEGR04/ft_LEGR04_080126.pdf [gefunden am 2018-09-17]
- Anonymous: "Installation Boxes Multifix Air Setting a new standard in energy efficiency", , 1. November 2011 (2011-11-01), XP055047672, Gefunden im Internet: URL:http://www.global-download.schneider-e lectric.com/852577A4005D7372/all/6642FF951 0F992B0852577AA006ABAFC/$File/isc01408_mul tifixair_cat.pdf [gefunden am 2012-12-12]

## Beschreibung

Die vorliegende Erfindung betrifft ein elektrisches Installationsgehäuse nach dem Oberbegriff des Anspruchs 1 (vgl. FR 2 780 567 A1).

Derartige Installationsgehäuse dienen zur Aufnahme von elektrischen Installationseinrichtungen, wie beispielsweise Steckdosen, Schaltern, Klemmleisten, Platinen, elektrischen Schaltgruppen oder elektrischen Einschüben. Die Befestigungsmittel können beispielsweise Öffnungen für Befestigungsschrauben sein, mit denen Rahmenelemente, Abdeckplatten oder dergleichen an dem Stützpfeiler verschraubt werden können. Aus der Druckschrift Legrand: "Batibox - Boite d'encastrement", 23. Januar 2007 (2007-01-23), XP055507517, Gefunden im Internet: URL:http:// documentation.mb-expansion.fr/maeva/pdf/LEGR04/ft_LEGR04_080126.pdf [gefunden am 2018-09-17] ist ein ähnliches Installationsgehäuse bekannt.

Es ist die Aufgabe der vorliegenden Erfindung, ein elektrisches Installationsgehäuse nach dem Oberbegriff des Anspruchs 1 bei kostengünstiger Herstellung im Hinblick auf eine erhöhte Flexibilität in der Anwendung zu verbessern.

Die Lösung dieser Aufgabe erfolgt durch die Merkmale des Anspruchs 1. Erfindungsgemäß ist der Stützpfeiler werkzeuglos in dem Installationsgehäuse befestigbar, d.h. durch Verklipsen und es lässt sich nach einem werkzeuglosen Einsetzen des Stützpfeilers in das Installationsgehäuse auf einfache Weise eine Trennwand in dem Installationsgehäuse installieren, indem diese in den Stützpfeiler eingesetzt wird. Hierdurch kann das Installationsgehäuse in einzelne Abteile untergliedert werden, um beispielsweise eine verbesserte elektrische Isolation zwischen benachbarten Einbaugeräten zu gewährleisten. Alternativ kann ein Stützpfeiler in das Installationsgehäuse eingesetzt werden, der bereits mit einer das Installationsgehäuse unterteilenden Trennwand versehen ist. Hierdurch kann der Montageschritt des Einsetzens der Trennwand entfallen.

Wenn der Stützpfeiler von oben in das Installationsgehäuse einklipsbar ist, stellt dies eine besonders einfache Montagemöglichkeit dar, die sich als besonders vorteilhaft erwiesen hat, wenn der Stützpfeiler mit einer Trennwand einstückig verbunden ist. Alternativ ist es natürlich auch möglich, den Stützpfeiler durch seitliches Verschieben oder durch eine Schwenkbewegung oder kombinierte Bewegungen in dem Boden des Installationsgehäuses zu verklipsen.

Vorteilhafte Ausführungsformen der Erfindung sind in der Beschreibung, der Zeichnung sowie den Unteransprüchen beschrieben.

Nach einer ersten vorteilhaften Ausführungsform kann der Stützpfeiler zumindest einen Führungskanal für eine Trennwand aufweisen. Auf diese Weise lässt sich eine Trennwand entweder seitlich oder aber bevorzugt von oben in den Führungskanal einsetzen, nachdem der Stützpfeiler in dem Installationsgehäuse befestigt worden ist. Gleichzeitig erfolgt durch einen solchen Führungskanal eine stabile Halterung der Stützwand.

Nach einer vorteilhaften Ausführungsform kann der Führungskanal durch zwei parallel beabstandete Stege gebildet sein, wobei die Stege insbesondere einen parallel zum Stützpfeiler und einen schräg zum Stützpfeiler verlaufenden Stegabschnitt aufweisen. Eine solche Ausbildung gewährleistet eine stabile Halterung der Trennwand, wobei gleichzeitig ein sicheres und leichtes Einführen der Trennwand in den Führungskanal gewährleistet ist. Durch den schräg zum Stützpfeiler verlaufenden Stegabschnitt ist gleichzeitig eine sichere Befestigung der Trennwand in dem Installationsgehäuse gesorgt.

Nach einer weiteren Ausführungsform der Erfindung kann mit dem Stützpfeiler zumindest eine Trennwand einstückig verbunden sein, an der ein Befestigungselement zum Befestigen der Trennwand an dem Installationsgehäuse angeordnet ist. Bei dieser Ausführungsform muss die Trennwand nicht separat montiert werden, sondern diese ist bereits mit dem Stützpfeiler einstückig verbunden. Da an der Trennwand ein Befestigungselement angeordnet ist, mit dem die Trennwand an dem Installationsgehäuse befestigt werden kann, ist die Trennwand nach erfolgter Montage besonders sicher in dem Installationsgehäuse gehalten.

In diesem Zusammenhang kann es vorteilhaft sein, wenn das Befestigungselement an einer Rastlasche der Trennwand angeordnet ist, da dieses dann mit Hilfe der Rastlasche in das Installationsgehäuse eingeklipst werden kann, nachdem der Stützpfeiler in dem Installationsgehäuse montiert worden ist.

Nach einer weiteren vorteilhaften Ausführungsform kann das Installationsgehäuse selbst einen angeformten Führungskanal für die Trennwand aufweisen. Hierdurch lässt sich die Trennwand nicht nur an dem Stützpfeiler sondern auch an dem Installationsgehäuse sicher und zuverlässig befestigen.

Nach einer weiteren vorteilhaften Ausführungsform kann in der Trennwand zumindest eine zu einer Außenwand der Trennwand hin offene Aussparung vorgesehen sein. Eine solche Aussparung ermöglicht das Durchführen von Leitungen auf einfache Weise. Wenn die Aussparung zu einem Außenrand der Trennwand hin offen ist, lässt sich die Verkabelung besonders einfach in die Aussparung einführen.

Nach einer weiteren vorteilhaften Ausführungsform kann die Aussparung durch ein aufklappbares Verschlusselement verschlossen sein, so dass die Trennwand je nach Bedarf mit oder ohne Aussparung verwendet werden kann. Gleichzeitig lassen sich hierdurch die Herstellungskosten durch Reduzierung der Produktvielfalt senken.

Nach einer weiteren vorteilhaften Ausführungsform kann das Verschlusselement über zumindest eine ausbrechbare Verbindungsbrücke in seiner Verschlussstellung gehalten sein. Auf diese Weise kann der Monteur bei Bedarf sehr einfach das Verschlusselement ganz oder teilweise aus der Trennwand herausbrechen, um in der Aussparung eine Verkabelung unterzubringen.

Nach einer weiteren vorteilhaften Ausführungsform kann die Trennwand mit zumindest einer Auflageplattform für einen Rahmen oder eine Abdeckung versehen sein. Hierdurch sind diese Elemente nicht nur vor dem Stützpfeiler, sondern auch von der Trennwand zusätzlich gelagert und gehalten.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine perspektivische Ansicht eines Installationsgehäuses mit noch nicht vollständig montiertem Stützpfeiler;
- Fig. 2: eine perspektivische Ansicht des Stützpfeilers von Fig. 1; und
- Fig. 3: eine teilgeschnittene perspektivische Ansicht eines Installationsgehäuses sowie eines Stützpfeilers mit integrierter Trennwand.

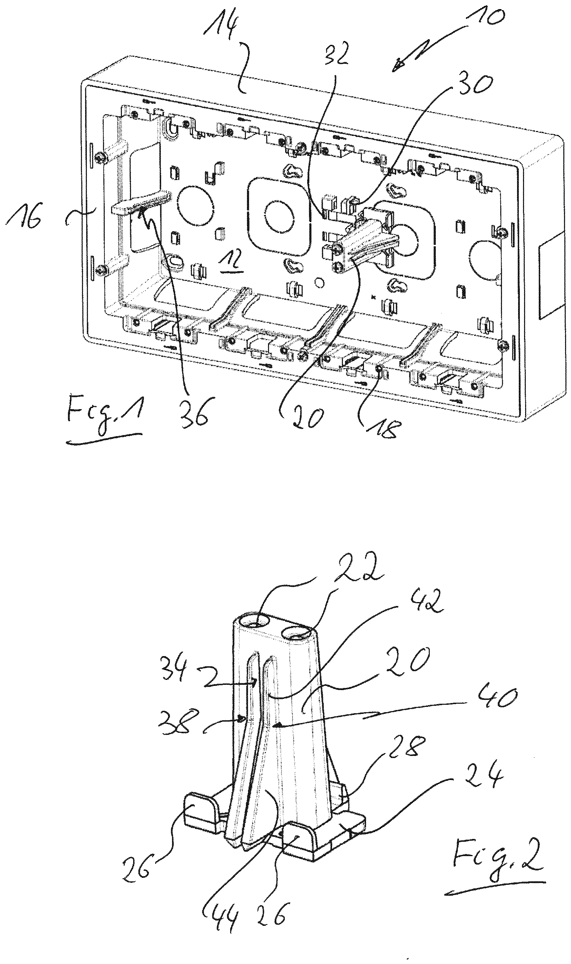

Fig. 1 zeigt eine perspektivische Ansicht eines an der Oberseite offenen elektrischen Installationsgehäuses 10, das grundsätzlich quaderförmig ausgebildet ist und einen Boden 12 sowie eine umlaufende Seitenwand 14 besitzt. An der Oberseite des Installationsgehäuses sind ein umlaufender Steg 16 sowie diverse Befestigungen 18 vorgesehen, um zusätzliche Bauteile wie Deckel, Rahmenelemente oder dergleichen befestigen zu können.

Zur Abstützung und Befestigung von (nicht dargestellten) Abdeckplatten oder Rahmenelementen ist in dem Installationsgehäuse 10 ein Stützpfeiler 20 werkzeuglos befestigbar, an dessen Oberseite Befestigungsmittel vorgesehen sind, um derartige Abdeckplatten oder Rahmenelemente zu fixieren. Bei dem dargestellten Ausführungsbeispiel sind die Befestigungsmittel als Befestigungsöffnungen 22 ausgebildet (Fig. 2), in denen Montageschrauben aufgenommen werden können.

Fig. 2 zeigt eine perspektivische Ansicht des Stützpfeilers 20, der wie auch das Installationsgehäuse 10 aus Kunststoff hergestellt ist. Der Stützpfeiler 20 besitzt bei dem dargestellten Ausführungsbeispiel einen pfeilerartigen Grundkörper mit ovalem Querschnitt und eine plattenförmigen Basis 24, an der verschiedene Rastlaschen 26, 28 angeformt sind. Diese Rastlaschen können mit entsprechend komplementär angeordneten Rastelementen 30, 32 (Fig. 1) in Eingriff treten, die am Boden des Installationsgehäuses 10 vorgesehen sind. Bei dem dargestellten Ausführungsbeispiel kann der Stützpfeiler 20 somit nach Absenken auf den Boden 12 seitlich durch Einschieben in den Rastelementen 30 und 32 lösbar verrastet werden.

Wie Fig. 2 weiterhin zeigt, weist der Stützpfeiler 20 auf zwei einander entgegengesetzten Seiten jeweils einen Führungskanal 34 auf, in den eine (in Fig. 1 nicht dargestellte) Trennwand einsetzbar ist. Nach erfolgter Montage des Stützpfeilers 20 kann diese Trennwand von oben in den Führungskanal 34 eingeführt werden, wobei zur weiteren Führung und Fixierung einer solchen Trennwand in dem Installationsgehäuse an der Innenseite der umlaufenden Seitenwand 14 ebenfalls ein Führungskanal 36 vorgesehen ist. Hierdurch lässt sich eine Trennwand von oben in das Installationsgehäuse 10 einschieben, die dann in den beiden Führungskanälen 34 und 36 gehalten ist.

Wie Fig. 2 verdeutlicht, sind die beiden Führungskanäle 34 des Stützpfeilers 20 durch zwei parallel beabstandete Stege 38 und 40 gebildet, wobei jeder Steg 38 und 40 einen parallel zum Stützpfeiler verlaufenden Stegabschnitt 42 und einen schräg zum Stützpfeiler verlaufenden Stegabschnitt 44 aufweist, die beide einstückig miteinander verbunden sind und einstückig an dem Stützpfeiler 20 angeformt sind.

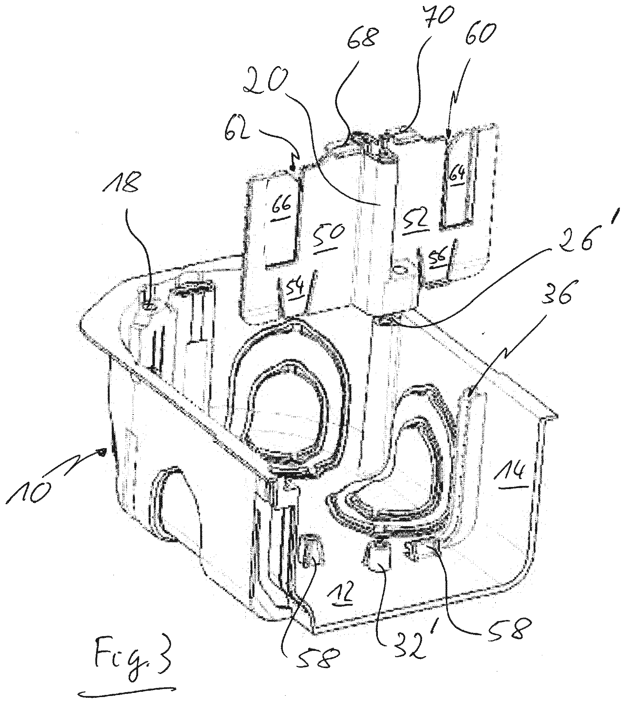

Fig. 3 zeigt eine weitere Ausführungsform eines elektrischen Installationsgehäuses 10, wobei für gleiche Elemente gleiche Bezugszeichen verwendet sind.

Bei dem in Fig. 3 dargestellten Installationsgehäuse 10 ist ein Stützpfeiler 20 vorgesehen, der ebenfalls werkzeuglos in dem Installationsgehäuse 10 bzw. am Boden 12 des Installationsgehäuses 10 befestigbar ist. Bei dieser Ausführungsform ist jedoch der Stützpfeiler 20 mit zwei seitlichen Trennwänden 50 und 52 versehen, die an dem Stützpfeiler 20 angeformt sind. Zur Montage des Stützpfeilers 20 kann dieser von oben in das Installationsgehäuse 10 eingesetzt werden, wobei an der Unterseite des Stützpfeilers vorgesehene Vorsprünge 26' mit entsprechenden Aufnahmen 32' am Boden des Installationsgehäuses lösbar in Eingriff treten können, so dass der Stützpfeiler 20 (zusammen mit den angeformten Trennwänden 50 und 52) von oben in das Installationsgehäuse einklipsbar ist. Beim Einführen können die beiden Trennwände 50 und 52 an ihren Außenseiten jeweils in Führungskanäle 36 von oben eingeführt werden, die an der Innenwand 14 des Installationsgehäuses 10 vorgesehen sind.

Für eine weitere Befestigung des Stützpfeilers 20 sind bei dem dargestellten Ausführungsbeispiel in jeder der Trennwände 50 und 52 Rastlaschen 54 und 56 vorgesehen, die nach einem leichten Ausfedern von der zugehörigen Trennwand in Rastelemente 58 eingesetzt werden können, die am Boden 12 des Installationsgehäuses 10 angeformt sind.

Bei dieser Ausführungsform erfolgt eine Halterung der Einheit aus Stützpfeiler 20 und Trennwänden 50, 52 durch ein Einrasten der Rastlaschen 54 und 56 in die Rastelemente 58.

Bei der in Fig. 3 dargestellten Ausführungsform wird die Einheit aus Stützpfeiler 20 und Trennwänden 50, 52 von oben in das Installationsgehäuse 10 eingeführt, wobei die Trennwände 50 und 52 an ihren seitlichen Außenkanten in die Führungskanäle 36 eingeführt werden. Wenn die Rastlaschen 54 und 56 an den Rastelementen 58 des Installationsgehäuses 10 anschlagen, können diese (jeweils in entgegengesetzte Richtungen) leicht ausgefedert werden, so dass der Stützpfeiler mit den daran angeformten Trennwänden 50 und 52 vollständig bis zum Boden 12 geführt werden kann. Anschließend können die Rastlaschen 54 und 56 in die Rastelemente 58 einrasten, so dass eine sichere Montage gewährleistet ist.

Wie Fig. 3 weiter verdeutlicht, ist in jeder Trennwand 50 und 52 eine zum oberen Außenrand der Trennwand hin offene Aussparung 60 und 62 vorgesehen, wobei jede Aussparung 60, 62 durch ein aufklappbares Verschlusselement 64, 66 verschlossen ist. Jedes Verschlusselement 64 und 66 ist über eine oder mehrere ausbrechbare Verbindungsbrücken in der in Fig. 3 dargestellten Verschlussstellung gehalten, so dass die Aussparungen 60 und 62 in der dargestellten Ansicht von den Verschlusselementen 64 und 66 verschlossen sind. Bei Bedarf können jedoch die Verschlusselemente 64 und 66 über die Verbindungsbrücken aus den Trennwänden 50 und 52 ausgebrochen werden, so dass Leitungen durch die Aussparungen hindurchgeführt werden können.

Schließlich verdeutlicht Fig. 3, dass an der Oberseite der Trennwände 50 und 52 jeweils eine Auflageplattform 68, 70 angeformt ist, die eine flächige und im montierten Zustand parallel zum Boden 12 verlaufende Auflage für einen Rahmen oder eine Abdeckung bietet.

Nach erfolgter Montage der vorstehend beschriebenen Stützpfeiler sowie einem Einsetzen der (separaten oder integrierten) Trennwände sind in dem Installationsgehäuse 10 einzelne Abteile geschaffen, in die elektrische Installationsgeräte wie beispielsweise Schalter, Steckdosen oder dergleichen eingesetzt werden können, wobei zwischen den einzelnen Abteilen eine verbesserte Isolierung gegen Kriechströme und Stromüberschläge geschaffen ist.

## Patentansprüche

1. Elektrisches Installationsgehäuse (10) mit zumindest einem Stützpfeiler (20), an dessen Oberseite Befestigungsmittel (22) für Abdeckplatten oder für Rahmenelemente vorgesehen sind, wobei in den Stützpfeiler (20) zumindest eine das Installationsgehäuse unterteilende Trennwand einsetzbar ist, oder der Stützpfeiler (20) mit zumindest einer solchen Trennwand (50, 52) versehen ist,
**dadurch gekennzeichnet, dass**
der Stützpfeiler werkzeuglos in dem Installationsgehäuse (10) befestigbar ist, indem der Stützpfeiler (20) von oben oder seitlich in das Installationsgehäuse (10) einklipsbar ist.

2. Installationsgehäuse nach Anspruch 1,
**dadurch gekennzeichnet, dass**
der Stützpfeiler (20) zumindest einen Führungskanal (34) für eine Trennwand aufweist.

3. Installationsgehäuse nach Anspruch 2,
**dadurch gekennzeichnet, dass**
der Führungskanal (34) durch zwei parallel beabstandete Stege (38, 40) gebildet ist, wobei die Stege (38, 40) insbesondere einen parallel zum Stützpfeiler und einen schräg zum Stützpfeiler (20) verlaufenden Stegabschnitt (42, 44) aufweisen.

4. Installationsgehäuse nach Anspruch 1,
**dadurch gekennzeichnet, dass**
mit dem Stützpfeiler (20) zumindest eine Trennwand (50, 52) einstückig verbundenen ist, an der ein Befestigungselement (26) zum Befestigen der Trennwand (50, 52) an dem Installationsgehäuse (10) angeordnet ist.

5. Installationsgehäuse nach Anspruch 4,
**dadurch gekennzeichnet, dass**
das Befestigungselement (26) an einer Rastlasche (54, 56) der Trennwand (50, 52) angeordnet ist.

6. Installationsgehäuse nach zumindest einem der vorstehenden Ansprüche, **dadurch gekennzeichnet, dass**
dieses zumindest einen angeformten Führungskanal (36) für die Trennwand (50, 52) aufweist.

7. Installationsgehäuse nach zumindest einem der vorstehenden Ansprüche, **dadurch gekennzeichnet, dass**
in der Trennwand (50, 52) zumindest eine zu einem Außenrand der Trennwand hin offene Aussparung (60, 62) vorgesehen ist.

8. Installationsgehäuse nach Anspruch 7,
**dadurch gekennzeichnet, dass**
die Aussparung (60, 62) durch ein aufklappbares Verschlusselement (64, 66) verschlossen ist.

9. Installationsgehäuse nach Anspruch 8,
**dadurch gekennzeichnet, dass**
das Verschlusselement (64, 66) über zumindest eine ausbrechbare Verbindungsbrücke in seiner Verschlussstellung gehalten ist.

10. Installationsgehäuse nach zumindest einem der vorstehenden Ansprüche, **dadurch gekennzeichnet, dass**
die Trennwand (50, 52) mit zumindest einer Auflageplattform (68, 70) für einen Rahmen oder eine Abdeckung versehen ist.

## Claims

1. An electrical installation housing (10) comprising at least one support pillar (20) at whose upper side fastening means (22) for cover plates or for frame elements are provided, wherein at least one partition wall dividing the installation housing can be inserted into the support pillar (20) or the support pillar (20) is provided with at least one such partition wall (50, 52), **characterized in that**
the support pillar can be fastened without tools in the installation housing (10) **in that** the support pillar (20) can be clipped into the installation housing (10) from above or laterally.

2. An installation housing in accordance with claim 1,
**characterized in that**
the support pillar (20) has at least one guide channel (34) for a partition wall.

3. An installation housing in accordance with claim 1,
**characterized in that**
the guide channel (34) is formed by two webs (38, 40) spaced apart in parallel, with the webs (38, 40) in particular having a web section (42, 44) extending in parallel with the support pillar and a web section (42, 44) extending obliquely to the support pillar (20).

4. An installation housing in accordance with claim 1,
**characterized in that**
at least one partition wall (50, 52) is connected in one piece with the support pillar (20), at which partition wall (50, 52) a fastening element (26) for fastening the partition wall (50, 52) to the installation housing (10) is arranged.

5. An installation housing in accordance with claim 4,
**characterized in that**
the fastening element (26) is arranged at a latch lug (54, 54) of the partition wall (50, 52).

6. An installation housing in accordance with at least one of the preceding claims,
**characterized in that**
the installation housing has at least one molded-on guide channel (36) for the partition wall (50, 52).

7. An installation device in accordance with at least one of the preceding claims,
**characterized in that**
at least one recess (60, 62) which is open towards an outer margin of the partition wall is provided in the partition wall (50, 52).

8. An installation device in accordance with claim 7,
**characterized in that**
the recess (60, 62) is closed by a closure element (64, 66) which can be folded open.

9. An installation device in accordance with claim 8,
**characterized in that**
the closure element (64, 66) is held in its closure position via at least one break-away connecting bridge.

10. An installation device in accordance with at least one of the preceding claims,
**characterized in that**
the partition wall (50, 52) is provided with at least one support platform (68, 70) for a frame or a cover.

## Revendications

1. Boîtier d'installation électrique (10) comprenant au moins un pilier de soutien (20), sur la face supérieure duquel sont prévus des moyens de fixation (22) pour des plaques de recouvrement ou pour des éléments de cadre, dans lequel au moins une cloison de séparation subdivisant le boîtier d'installation peut être insérée dans le pilier de soutien (20), ou le pilier de soutien (20) est pourvu d'au moins une telle cloison de séparation (50, 52), **caractérisé en ce que**
le pilier de soutien peut être fixé sans outil dans le boîtier d'installation (10) par encliquetage du pilier de soutien (20) depuis le haut ou latéralement dans le boîtier d'installation (10).

2. Boîtier d'installation selon la revendication 1,
**caractérisé en ce que**
le pilier de soutien (20) présente au moins un canal de guidage (34) pour une cloison de séparation.

3. Boîtier d'installation selon la revendication 2,
**caractérisé en ce que**
le canal de guidage (34) est formé par deux barrettes (38, 40) espacées parallèlement, les barrettes (38, 40) présentant en particulier des portions (42, 44) dont l'une s'étend parallèlement au pilier de soutien et dont l'autre s'étend en oblique par rapport au pilier de soutien (20).

4. Boîtier d'installation selon la revendication 1,
**caractérisé en ce que**
au moins une cloison de séparation (50, 52) est reliée d'un seul tenant au pilier de soutien (20), sur laquelle est disposé un élément de fixation (26) pour fixer la cloison de séparation (50, 52) au boîtier d'installation (10).

5. Boîtier d'installation selon la revendication 4,
**caractérisé en ce que**
l'élément de fixation (26) est disposé sur une patte d'enclenchement (54, 56) de la cloison de séparation (50, 52).

6. Boîtier d'installation selon l'une au moins des revendications précédentes, **caractérisé en ce que**
celui-ci présente au moins un canal de guidage conformé (36) pour la cloison de séparation (50, 52).

7. Boîtier d'installation selon l'une au moins des revendications précédentes, **caractérisé en ce que**
il est prévu, dans la cloison de séparation (50, 52), au moins un évidement (60, 62) ouvert vers un bord extérieur de la cloison de séparation.

8. Boîtier d'installation selon la revendication 7,
**caractérisé en ce que**
l'évidement (60, 62) est fermé par un élément d'obturation rabattable (64, 66).

9. Boîtier d'installation selon la revendication 8,
**caractérisé en ce que**
l'élément d'obturation (64, 66) est maintenu dans sa position d'obturation par au moins un pont de liaison arrachable.

10. Boîtier d'installation selon l'une au moins des revendications précédentes, **caractérisé en ce que**
la cloison de séparation (50, 52) est pourvue d'au moins une plateforme de support (68, 70) pour un cadre ou un couvercle.
